# EUROPEAN PATENT APPLICATION

(11) **EP 4 773 551 A1**
(43) Date of publication of application: **08.07.2026**
(21) Application number: 23955364.7
(22) Date of filing: 28.12.2023
(51) Int. Cl.: H04L 12/12

(54) **NETWORK FORMATION SYSTEM, BATTERY MANAGEMENT APPARATUS, AND ELECTRIC VEHICLE**

(30) Priority: 08.10.2023 CN 202311300204
(71) Applicant: Sungiant Automotive Electronics Co., Ltd., Shenzhen, Guangdong 518101 (CN)
(72) Inventor: XU, Tonghui, Shenzhen, Guangdong 518101 (CN)
(74) Representative: Porta & Consulenti Associati S.p.A.
(86) International application number: PCT/CN2023/142769
(87) International publication number: WO 2025/077027

(57) **Abstract**

The embodiments of the present application belong to the technical field of batteries. Provided are a network formation system, a battery management apparatus, and an electric vehicle. The network formation system comprises: a wake-up processing module, which is configured to generate a wake-up signal; a first power supply module, which is connected to a power supply source and the wake-up processing module, and which is configured to generate a first power supply voltage on the basis of the wake-up signal and the power supply source; a main control module, which is configured to perform initialization operation on the basis of the first power supply voltage; a second power supply module, which is configured to generate a second power supply voltage on the basis of the power supply source; and a main communication module, which is connected to the second power supply module, the wake-up processing module and the main control module, and which is configured to perform initialization operation on the basis of the second power supply voltage and the wake-up signal so as to communicatively connect to a battery pack, wherein the main control module is configured to perform data transmission with the battery pack on the basis of the main communication module. The embodiments of the present application can improve the network formation speed.

## Description

### CROSS-REFERENCE TO RELATED APPLICATION

This application is filed on the basis of Chinese patent application No. 202311300204.2 filed October 8, 2023, and claims priority to the Chinese patent application, the entire contents of which are incorporated herein by reference.

### TECHNICAL FIELD

The present disclosure relates to the field of batteries, and more particularly to a networking system, a battery management apparatus, and an electric vehicle.

### BACKGROUND

Currently, to facilitate the management and monitoring of the status of a battery pack, a battery management system uses wireless communication to perform data transmission with the battery pack. In the related art, wireless communication between a battery management system and a battery pack has problems such as long first networking time and slow networking speed. Due to these problems, when a battery pack is applied to a vehicle, a user has to wait for a long time before driving after starting the vehicle. Therefore, how to provide a networking system to improve the networking speed has become an urgent technical problem to be addressed.

### SUMMARY

A main objective of embodiments of the present disclosure is to provide a networking system, a battery management apparatus, and an electric vehicle, to improve the networking speed.

To achieve the above objective, in accordance with a first aspect of the present disclosure, an embodiment provides a networking system, including:
a wake-up processing module configured to generate a wake-up signal;
a first power supply module connected to a power source and the wake-up processing module, and configured to generate a first power supply voltage according to the wake-up signal and the power source;
a main control module connected to the first power supply module, and configured to perform an initialization operation according to the first power supply voltage;
a second power supply module connected to the power source, and configured to generate a second power supply voltage according to the power source; and
a main communication module connected to the second power supply module, the wake-up processing module, and the main control module, and configured to perform an initialization operation according to the second power supply voltage and the wake-up signal to establish a communication connection to a battery pack;
where the main control module is configured to perform data transmission with the battery pack through the main communication module.

In some embodiments, the battery pack includes a first battery cell and a second battery cell, and the main communication module includes:
a first communication unit connected to the main control module, the wake-up processing module, and the second power supply module, and configured to perform an initialization operation according to the second power supply voltage and the wake-up signal to establish a communication connection to the first battery cell; and
a second communication unit connected to the first communication unit, the main control module, the wake-up processing module, and the second power supply module, and configured to perform an initialization operation according to the second power supply voltage and the wake-up signal to establish a communication connection to the second battery cell.

In some embodiments, the main control module performs data transmission with the first battery cell in the following manner:
the main control module sends a preset first address to the first communication unit;
the first communication unit performs an initialization operation according to the second power supply voltage and the wake-up signal, and establishes a communication connection to the first battery cell according to the first address; and
the main control module performs data transmission with the first battery cell through the first communication unit.

In some embodiments, the main control module performs data transmission with the second battery cell in the following manner:
the main control module sends a preset second address to the second communication unit;
the second communication unit performs an initialization operation according to the second power supply voltage and the wake-up signal, and establishes a communication connection to the second battery cell according to the second address; and
the main control module performs data transmission with the first battery cell through the first communication unit.

In some embodiments, the manner in which the main control module performs data transmission with the first battery cell further includes:
the first communication unit acquires a first data transmission state of the first battery cell;
in response to the first data transmission state indicating a failed transmission, the first communication unit sends a failure instruction to the main control module; and
the main control module sends the first address to the second communication unit according to the failure instruction, such that the second communication unit establishes a communication connection to the first battery cell according to the first address, and the main control module performs data transmission with the first battery cell through the second communication unit.

In some embodiments, the manner in which the main control module performs data transmission with the first battery cell further includes:
the first communication unit acquires a second data transmission state of the first battery cell;
in response to the second data transmission state indicating a successful transmission, the first communication unit sends a reconnection instruction to the main control module; and
the main control module controls the second communication unit to disconnect from the first battery cell according to the reconnection instruction, to reconnect the first communication unit to the first battery cell.

To achieve the above objective, in accordance with a second aspect of the present disclosure, an embodiment provides a battery management apparatus, including:
the networking system according to any one of the embodiments of the first aspect; and
at least one battery pack, configured to perform data transmission with the main control module in the networking system, where the main control module is configured to monitor the battery pack according to transmission data of the battery pack.

To achieve the above objective, in accordance with a third aspect of the present disclosure, an embodiment provides an electric vehicle including the battery management apparatus according to the second aspect.

In the networking system, the battery management apparatus, and the electric vehicle provided in the present disclosure, the first power supply module generates a first power supply voltage according to a wake-up signal and a power source, and the main control module performs an initialization operation according to the first power supply voltage. The second power supply module generates a second power supply voltage according to the power source, and the main communication module performs an initialization operation according to the second power supply voltage to establish a communication connection to the battery pack. The main control module performs data transmission with the battery pack through the main communication module. It can be seen that in the embodiments of the present disclosure, the initialization start time of the main control module is synchronized with the initialization start time of the main communication module, and the embodiments of the present disclosure can improve the networking speed compared with a method in the related art that includes waking up the main control module to perform an initialization operation and then waking up the main communication module for networking according to a wake-up signal generated after the initialization operation of the main control module.

### BRIEF DESCRIPTION OF DRAWINGS

FIG. 1 is a schematic diagram of a networking system according to an embodiment of the present disclosure;
FIG. 2 is another schematic diagram of a networking system according to an embodiment of the present disclosure;
FIG. 3 is a flowchart of a method of data transmission between a main control module and a first battery cell according to an embodiment of the present disclosure;
FIG. 4 is a flowchart of a method of data transmission between a main control module and a second battery cell according to an embodiment of the present disclosure;
FIG. 5 is a flowchart of another method of data transmission between a main control module and a first battery cell according to an embodiment of the present disclosure;
FIG. 6 is a flowchart of another method of data transmission between a main control module and a first battery cell according to an embodiment of the present disclosure;
FIG. 7 is a schematic diagram of a battery management apparatus according to an embodiment of the present disclosure.

### Reference numerals:

wake-up processing module 101, first power supply module 102, main control module 103, second power supply module 104, main communication module 105, first communication unit 106, second communication unit 107, power source 201, battery pack 301, first battery cell 302, second battery cell 303.

### DETAILED DESCRIPTION

In order to make the objectives, technical solutions, and advantages of this application clearer, the present disclosure is further described in detail below with reference to the accompanying drawings and embodiments. It is to be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second" in the description, the claims, and the accompanying drawings are used to distinguish similar objects, and are not necessarily used to describe a specific sequence or a precedence order.

Unless otherwise defined, meanings of all technical and scientific terms used in this specification are the same as those usually understood by those having ordinary skills in the art to which the present disclosure belongs. Terms used in this specification are merely intended to describe objectives of the embodiments of the present disclosure, but are not intended to limit the present disclosure.

Currently, to facilitate the management and monitoring of the status of a battery pack, a battery management system uses wireless communication to perform data transmission with the battery pack. In the related art, wireless communication between a battery management system and a battery pack has problems such as long first networking time and slow networking speed. Due to these problems, when a battery pack is applied to a vehicle, a user has to wait for a long time before driving after starting the vehicle. Therefore, how to provide a networking system to improve the networking speed has become an urgent technical problem to be addressed.

Based on this, embodiments of the present disclosure provide a networking system, a battery management apparatus, and an electric vehicle, to improve the networking speed.

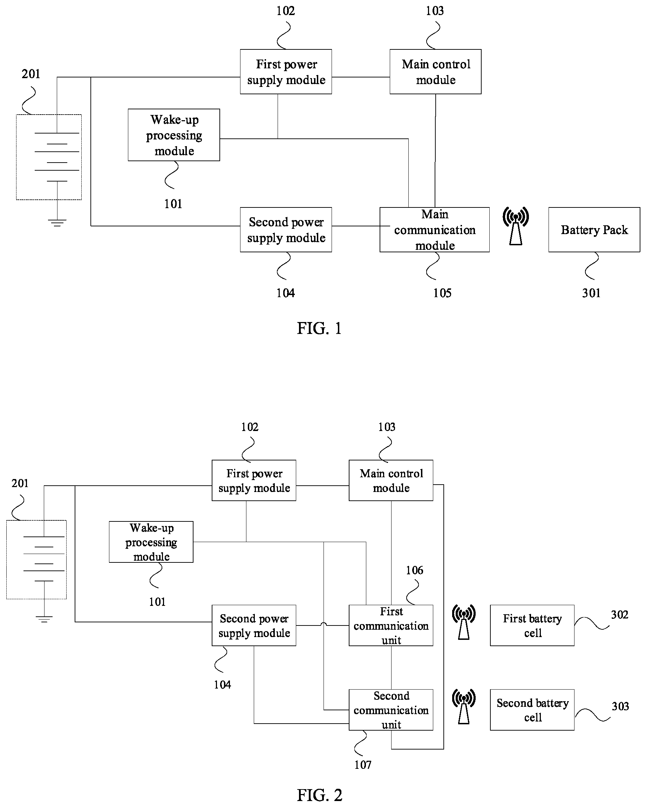

Referring to FIG. 1, an embodiment of the present disclosure provides a networking system, including a wake-up processing module 101, a first power supply module 102, a main control module 103, a second power supply module 104, and a main communication module 105. The wake-up processing module 101 is configured to generate a wake-up signal. The first power supply module 102 is connected to a power source 201 and the wake-up processing module 101, and is configured to generate a first power supply voltage according to the wake-up signal and the power source 201. The main control module 103 is connected to the first power supply module 102, and is configured to perform an initialization operation according to the first power supply voltage. The second power supply module 104 is connected to the power source 201, and is configured to generate a second power supply voltage according to the power source 201. The main communication module 105 is connected to the second power supply module 104, the wake-up processing module 101, and the main control module 103, and is configured to perform an initialization operation according to the second power supply voltage and the wake-up signal to establish a communication connection to a battery pack 301. The main control module 103 is configured to perform data transmission with the battery pack 301 through the main communication module 105.

For example, the networking system is configured to establish a communication connection to the battery pack 301 to perform data transmission with the battery pack 301, thereby acquiring status data of the battery pack 301 (including battery level, voltage, current, temperature, etc.), charging and discharging process data (including current, voltage, capacity, etc. of the battery pack 301 during charging and discharging), etc. The main control module 103 is configured to monitor the battery pack 301 according to the above data, for example, may monitor a working status of the battery pack 301 according to the status data, and may analyze charging and discharging efficiency and performance of the battery pack 301 according to the charging and discharging process data. In addition, the main control module 103 may also monitor whether the battery pack 301 has a fault or anomaly according to the above data, and instantly send alarm information. It can be understood that the networking system according to the embodiment of the present disclosure may be in communication connection with at least one battery pack 301, i.e., the number of battery packs 301 in communication connection with the networking system is not particularly limited in the embodiments of the present disclosure. Moreover, the battery pack 301 includes at least one cell. In an embodiment of the present disclosure, the networking system may be in communication connection with each cell in the battery pack 301 to acquire data of each cell, thereby improving the accuracy of battery monitoring. Alternatively, the networking system may be in communication connection with the entire battery pack 301 to acquire data of the entire battery pack 301, thereby reducing the amount of data to be transmitted.

It can be understood that in the embodiments of the present disclosure, the main communication module 105 in the networking system is in communication connection with the battery pack 301 and serves as an intermediary, the battery pack 301 transmits data to the main control module 103 through the main communication module 105, and the main control module 103 sends a control instruction to the battery pack 301 through the main communication module 105. A method of communication connection between the main communication module 105 and the battery pack 301 will be described in detail below. The wake-up processing module 101 is configured to generate a wake-up signal according to an external signal. The external signal is a signal capable of enabling the networking system to operate. For example, when the networking system is applied to an electric vehicle, the external signal may be a start signal of the electric vehicle. The first power supply module 102 is connected to the external power source 201, and is configured to convert a voltage supplied by the power source 201 into a first power supply voltage according to the wake-up signal. The main control module 103 is configured to perform an initialization operation according to the first power supply voltage. It can be seen that the first power supply module 102 supplies power intermittently, and the first power supply module 102 needs to perform an enable operation according to the wake-up signal to generate the first power supply voltage. The second power supply module 104 is configured to convert the voltage supplied by the power source 201 into a second power supply voltage. The main communication module 105 is configured to perform an initialization operation according to the wake-up signal and the second power supply voltage, to form a network with the battery pack 301, i.e., to establish a communication connection to the battery pack 301. It can be seen that the second power supply module 104 supplies power continuously, and after the wake-up processing module 101 generates the wake-up signal, the main communication module 105 can immediately trigger initialization. After the initialization of the main communication module 105 is successfully completed, the main communication module 105 can form a network with the battery pack 301. After the initialization of the main control module 103 is successfully completed, the main communication module 105 can acquire data of the battery pack 301 through the main communication module 105, and send a control instruction to the battery pack 301 through the main communication module 105.

Setting the first power supply module 102 to supply power intermittently and the second power supply module 104 to supply power continuously has the following advantages. Because the battery management system needs to enter a low power mode as a whole when powered down to reduce the overall sleep power consumption, the first power supply module 102 is set to supply power intermittently, the first power supply module 102 is first woken up by the wake-up signal, and then the main control module 103 is initialized by the first power supply voltage from the first power supply module 102. It can be understood that the battery management system may include the networking system, or may include only the main control module 103.

In addition, because the code size of the main communication module 105 is small, the initialization speed of the main communication module 105 is faster than the initialization speed of the main control module 103. While the main control module 103 is still in a software initialization stage, the main communication module 105 has completed initialization and performed wireless communication networking with a wireless communication module in the battery pack 301. As such, the main control module 103 can implement data transmission with the battery pack 301 after completing the initialization operation.

In the networking system provided in the embodiments of the present disclosure, the first power supply module 102 generates a first power supply voltage according to a wake-up signal and a power source 201, and the main control module 103 performs an initialization operation according to the first power supply voltage. The second power supply module 104 generates a second power supply voltage according to the power source 201, and the main communication module 105 performs an initialization operation according to the second power supply voltage to establish a communication connection to the battery pack 301. The main control module 103 performs data transmission with the battery pack 301 through the main communication module 105. It can be seen that in the embodiments of the present disclosure, the initialization start time of the main control module 103 is synchronized with the initialization start time of the main communication module 105, and the embodiments of the present disclosure can improve the networking speed compared with the method in the related art that includes waking up the main control module 103 to perform an initialization operation and then waking up the main communication module 105 for networking according to a wake-up signal generated after the initialization operation of the main control module 103.

Referring to FIG. 1 and FIG. 2, in some embodiments, the battery pack 301 includes a first battery cell 302 and a second battery cell 303, and the main communication module 105 includes a first communication unit 106 and a second communication unit 107. The first communication unit 106 is connected to the main control module 103, the wake-up processing module 101, and the second power supply module 104, and is configured to perform an initialization operation according to the second power supply voltage and the wake-up signal to establish a communication connection to the first battery cell 302. The second communication unit 107 is connected to the first communication unit 106, the main control module 103, the wake-up processing module 101, and the second power supply module 104, and is configured to perform an initialization operation according to the second power supply voltage and the wake-up signal to establish a communication connection to the second battery cell 303.

For example, to improve the networking speed, the main communication module 105 includes a first communication unit 106 and a second communication unit 107. The first communication unit 106 and the second communication unit 107 are respectively connected to different battery cells. For example, the first communication unit 106 may be in communication connection with the first battery cell 302, and the second communication unit 107 may be in communication connection with the second battery cell 303. It can be understood that the first battery cell 302 may be in the form of a battery pack or a single cell, and similarly, the second battery cell 303 may also be in the form of a battery pack or a single cell. It can be understood that in the embodiments of the present disclosure, the number of first battery cells 302 to which the first communication unit 106 can be communicatively connected is not particularly limited, and similarly, the number of second communication units 107 is not particularly limited. The first communication unit 106 is connected to the second power supply module 104 and the wake-up processing module 101 to perform an initialization operation according to the second power supply voltage and the wake-up signal and form a network with the first battery cell 302 after completing the initialization. After the initialization of the main control module 103 is completed, the first communication unit 106 serves as an intermediary between the main control module 103 and the first battery cell 302, to enable the main control module 103 to perform data transmission with the first battery cell 302. The second communication unit 107 is connected to the second power supply module 104 and the wake-up processing module 101 to perform an initialization operation according to the second power supply voltage and the wake-up signal and form a network with the second battery cell 303 after completing the initialization. After the initialization of the main control module 103 is completed, the second communication unit 107 serves as an intermediary between the main control module 103 and the first battery cell 302, to enable the main control module 103 to perform data transmission with the second battery cell 303. It can be understood that the second communication unit 107 is further connected to the first communication unit 106 such that when a communication link between the first communication unit 106 and the main control module 103 is interrupted, data of the first battery cell 302 can be forwarded to the main control module 103 through the second communication unit 107, or when a communication link between the second communication unit 107 and the main control module 103 is interrupted, data of the second battery cell 303 can be forwarded to the main control module 103 through the first communication unit 106.

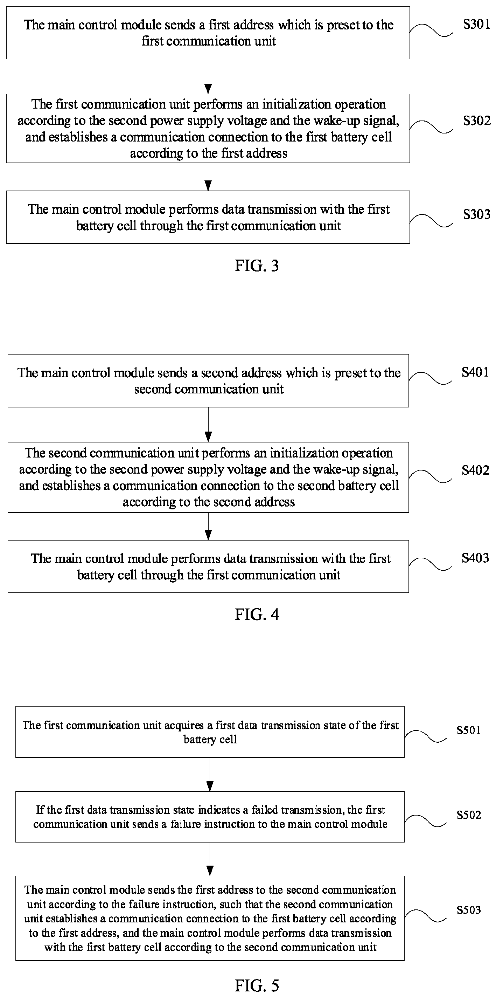

Referring to FIG. 2 and FIG. 3, in some embodiments, the manner in which the main control module 103 performs data transmission with the first battery cell 302 includes, but is not limited to, the following steps S301 to S303.

At S301, the main control module sends a preset first address to the first communication unit.

At S302, the first communication unit performs an initialization operation according to the second power supply voltage and the wake-up signal, and establishes a communication connection to the first battery cell according to the first address.

At S303, the main control module performs data transmission with the first battery cell through the first communication unit.

In some embodiments, in S301, the first address is a communication address (e.g., a Media Access Control (MAC) address) of the first battery cell 302, and the main control module 103 may send the first address to the first communication unit 106 in advance or write the first address to the first communication unit 106 in advance, which is not particularly limited in the embodiments of the present disclosure.

In some embodiments, in S302, the first communication unit 106 performs an initialization operation according to the second power supply voltage and the wake-up signal, and after completing the initialization operation, forms a network with the first battery cell 302 according to the first address, i.e., establishes a communication connection to the first battery cell 302.

In some embodiments, in S303, the first communication unit 106 serves as an intermediary between the main control module 103 and the first battery cell 302, to enable the main control module 103 to perform data transmission with the first battery cell 302.

Referring to FIG. 2 and FIG. 4, in some embodiments, the manner in which the main control module 103 performs data transmission with the second battery cell 303 includes, but is not limited to, the following steps S401 to S403.

At S401, the main control module sends a preset second address to the second communication unit.

At S402, the second communication unit performs an initialization operation according to the second power supply voltage and the wake-up signal, and establishes a communication connection to the second battery cell according to the second address.

At S403, the main control module performs data transmission with the first battery cell through the first communication unit.

In some embodiments, in S401, the second address is a communication address (e.g., a Media Access Control (MAC) address) of the second battery cell 303, and the main control module 103 may send the second address to the second communication unit 107 in advance or write the second address to the second communication unit 107 in advance, which is not particularly limited in the embodiments of the present disclosure.

In some embodiments, in S402, the second communication unit 107 performs an initialization operation according to the second power supply voltage and the wake-up signal, and after completing the initialization operation, forms a network with the second battery cell 303 according to the second address, i.e., establishes a communication connection to the second battery cell 303.

In some embodiments, in S403, the second communication unit 107 serves as an intermediary between the main control module 103 and the second battery cell 303, to enable the main control module 103 to perform data transmission with the second battery cell 303.

Referring to FIG. 5, in some embodiments, the manner in which the main control module 103 performs data transmission with the first battery cell 302 further includes, but is not limited to, the following steps S501 to S503.

At S501, the first communication unit acquires a first data transmission state of the first battery cell.

At S502, if the first data transmission state indicates a failed transmission, the first communication unit sends a failure instruction to the main control module.

At S503, the main control module sends the first address to the second communication unit according to the failure instruction, such that the second communication unit establishes a communication connection to the first battery cell according to the first address, and the main control module performs data transmission with the first battery cell through the second communication unit.

In some embodiments, in S501, the first data transmission state is used for describing whether the communication connection between the first communication unit 106 and the first battery cell 302 is interrupted, and the interruption of the communication connection will affect the data transmission of the first battery cell 302. The first communication unit 106 may determine the first data transmission state by heartbeat detection or other means. The heartbeat detection means that the first communication unit 106 and the first battery cell 302 may exchange heartbeat signals to determine whether the communication connection is normal. If the first communication unit 106 does not receive a heartbeat signal from the first battery cell 302 within a period of time or a heartbeat signal sent by the first battery cell 302 is abnormal, the first communication unit 106 determines that the communication connection has been interrupted. When it is determined that the communication connection has been interrupted, a first data transmission state indicating a failed transmission is obtained. When it is determined that the communication connection is normal, a first data transmission state indicating a successful transmission is obtained.

In some embodiments, in S502, if the first data transmission state indicates a failed transmission, the first communication unit 106 generates a failure instruction and sends the failure instruction to the main control module 103.

In some embodiments, in S503, the failure instruction may carry identification information of the first battery cell 302, where the identification information is used for distinguishing different battery cells, for example, may be the first address. After receiving the failure instruction, the main control module 103 determines that the first communication unit 106 has been disconnected from the first battery cell 302. In this case, to ensure that the main control module 103 can still acquire data of the first battery cell 302, the main control module 103 sends the first address to the second communication unit 107. The second communication unit 107 establishes a communication connection to the first battery cell 302 according to the first address, i.e., in this case, the second communication unit 107 serves as an intermediary for data transmission between the main control module 103 and the first battery cell 302.

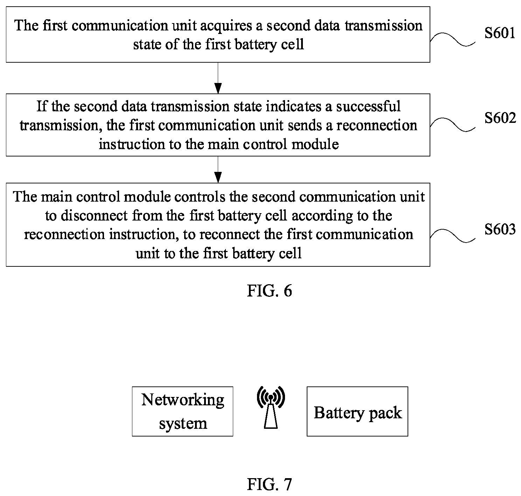

Referring to FIG. 2 and FIG. 6, in some embodiments, the manner in which the main control module 103 performs data transmission with the first battery cell 302 further includes, but is not limited to, the following steps S601 to S603.

At S601, the first communication unit acquires a second data transmission state of the first battery cell.

At S602, if the second data transmission state indicates a successful transmission, the first communication unit sends a reconnection instruction to the main control module.

At S603, the main control module controls the second communication unit to disconnect from the first battery cell according to the reconnection instruction, to reconnect the first communication unit to the first battery cell.

In some embodiments, in S601, the second data transmission state is used for describing whether a communication connection between the first communication unit 106 and the first battery cell 302 is successfully reestablished. The first communication unit 106 may determine the second data transmission state by heartbeat detection or other means. When the reestablishment is successful, a second data transmission state indicating a successful transmission is obtained. When the reestablishment fails, a second data transmission state indicating a failed transmission is obtained.

In some embodiments, in S602, if the second data transmission state indicates a successful transmission, it indicates that the first communication unit 106 can reacquire the data sent by the first battery cell 302. In this case, to reduce network congestion or the like due to the connection of a large number of battery cells to the second battery cell 303, the first communication unit 106 generates a reconnection instruction and sends the reconnection instruction to the main control module 103.

In some embodiments, in S603, the reconnection instruction may carry identification information of the first battery cell 302, where the identification information is used for distinguishing different battery cells, for example, may be the first address. The main control module 103 sends the first address to the second communication unit 107 according to the reconnection instruction, such that the second communication unit 107 disconnects from the battery cell corresponding to the first address according to the first address, i.e., disconnects from the first battery cell 302, and the first communication unit 106 reconnects to the first battery cell 302.

It can be understood that when the second communication unit is disconnected from the second battery cell, the first communication unit 106 and the second battery cell 303 may be communicatively connected by a method similar to steps S501 to S503, to ensure that the main control module 103 can acquire data of the second battery cell 303 through the first communication unit 106 when the second communication unit 107 is disconnected from the second battery cell 303. In addition, when the second communication unit 107 reconnects to the second battery cell 303, the first communication unit 106 and the second battery cell 303 may be disconnected by a method similar to steps S601 to S603, such that the second communication unit 107 can reconnect to the second battery cell 303. The above two cases will not be described in detail in the embodiments of the present disclosure.

Referring to FIG. 7, an embodiment of the present disclosure further provides a battery management apparatus including the networking system according to any one of the above embodiments and at least one battery pack. The at least one battery pack is configured to perform data transmission with the main control module in the networking system, where the main control module is configured to monitor the battery pack according to transmission data of the battery pack.

Specific embodiments of the battery management apparatus are basically the same as the specific embodiments of the networking system, so the details will not be repeated herein.

An embodiment of the present disclosure further provides an electric vehicle including the battery management apparatus according to any one of the above embodiments.

Specific embodiments of the electric vehicle are basically the same as the specific embodiments of the battery management apparatus, so the details will not be repeated herein.

The contents described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of technologies and the emergence of new application scenarios, the technical schemes provided in the embodiments of the present disclosure are also applicable to similar technical problems.

Those having ordinary skills in the art may understand that the technical scheme shown in the drawings does not constitute a limitation to the embodiments of the present disclosure, and more or fewer steps than those shown in the drawings may be included, or some steps may be combined, or different steps may be used.

The apparatus embodiments described above are merely examples. The units described as separate components may or may not be physically separated, i.e., may be located in one place or may be distributed over a plurality of network units. Some or all of the modules may be selected according to actual needs to achieve the objectives of the schemes of the embodiments of the present disclosure.

Those having ordinary skills in the art can understand that all or some of the steps in the methods disclosed above and the functional modules/units in the system and the apparatus can be implemented as software, firmware, hardware, and appropriate combinations thereof.

In the specification and accompanying drawings of the present disclosure, the terms such as "first," "second," "third," "fourth," are intended to distinguish between similar objects, and are not necessarily used to describe a specific sequence or a precedence order. It is to be understood that the data termed in such a way are interchangeable in appropriate circumstances, such that the embodiments of the present disclosure described herein can be implemented in orders other than the order illustrated or described herein. Moreover, the terms "include," "comprise," and any other variants thereof mean are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It is to be understood that in the present disclosure, "at least one" means one or more and "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relationship between the associated objects. "At least one of" and similar expressions refer to any combination of items listed, including one item or any combination of a plurality of items. For example, at least one of a, b, or c may represent a, b, c, "a and b," "a and c," "b and c," or "a, b, and c," where a, b, and c may be singular or plural.

In the several embodiments provided in the present disclosure, it is to be understood that the disclosed apparatus and method may be implemented in other manners. For example, the described apparatus embodiments are only exemplary. For example, the division of the units is merely a logical function division and other division manners may be used in practical implementations. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position, or may be distributed on a plurality of network units. Some or all of the units may be selected according to actual needs to achieve the objects of the scheme of this embodiment.

In addition, functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

The integrated unit may be stored in a computer-readable storage medium if implemented in the form of a software functional unit and sold or used as an independent product. Based on such an understanding, the technical schemes of the present disclosure essentially, or the part contributing to the related art, or all or some of the technical schemes may be implemented in the form of a software product. The software product is stored in a storage medium, and includes several instructions for instructing a computer device (which may be a personal computer, a server, a network device, or the like) to execute all or some of the steps of the methods described in the embodiments of the present disclosure. The storage medium includes: any medium that can store program code, such as a USB flash drive, a removable hard disk, a read-only memory (ROM), a random access memory (RAM), a magnetic disk, or an optical disk.

Although some embodiments of the present disclosure are described above with reference to the accompanying drawings, these embodiments are not intended to limit the protection scope of the embodiments of the present disclosure. Any modifications, equivalent replacements and improvements made by those having ordinary skills in the art without departing from the scope and essence of the embodiments of the present disclosure shall fall within the protection scope of the embodiments of the present disclosure.

## Claims

1. A networking system, comprising:
a wake-up processing module configured to generate a wake-up signal;
a first power supply module connected to a power source and the wake-up processing module, and configured to generate a first power supply voltage according to the wake-up signal and the power source;
a main control module connected to the first power supply module, and configured to perform an initialization operation according to the first power supply voltage;
a second power supply module connected to the power source, and configured to generate a second power supply voltage according to the power source; and
a main communication module connected to the second power supply module, the wake-up processing module, and the main control module, and configured to perform an initialization operation according to the second power supply voltage and the wake-up signal to establish a communication connection to a battery pack;
wherein the main control module is configured to perform data transmission with the battery pack through the main communication module.

2. The system of claim 1, wherein the battery pack comprises a first battery cell and a second battery cell, and the main communication module comprises:
a first communication unit connected to the main control module, the wake-up processing module, and the second power supply module, and configured to perform an initialization operation according to the second power supply voltage and the wake-up signal to establish a communication connection to the first battery cell; and
a second communication unit connected to the first communication unit, the main control module, the wake-up processing module, and the second power supply module, and configured to perform an initialization operation according to the second power supply voltage and the wake-up signal to establish a communication connection to the second battery cell.

3. The system of claim 2, wherein the main control module performs data transmission with the first battery cell in the following manner:
the main control module sends a first preset address to the first communication unit;
the first communication unit performs an initialization operation according to the second power supply voltage and the wake-up signal, and establishes a communication connection to the first battery cell according to the first address; and
the main control module performs data transmission with the first battery cell through the first communication unit.

4. The system of claim 3, wherein the main control module performs data transmission with the second battery cell in the following manner:
the main control module sends a preset second address to the second communication unit;
the second communication unit performs an initialization operation according to the second power supply voltage and the wake-up signal, and establishes a communication connection to the second battery cell according to the second address; and
the main control module performs data transmission with the first battery cell through the first communication unit.

5. The system of claim 4, wherein the manner in which the main control module performs data transmission with the first battery cell further comprises:
the first communication unit acquires a first data transmission state of the first battery cell;
in response to the first data transmission state indicating a failed transmission, the first communication unit sends a failure instruction to the main control module; and
the main control module sends the first address to the second communication unit according to the failure instruction, such that the second communication unit establishes a communication connection to the first battery cell according to the first address, and the main control module performs data transmission with the first battery cell through the second communication unit.

6. The system of claim 5, wherein the manner in which the main control module performs data transmission with the first battery cell further comprises:
the first communication unit acquires a second data transmission state of the first battery cell;
in response to the second data transmission state indicating a successful transmission, the first communication unit sends a reconnection instruction to the main control module; and
the main control module controls the second communication unit to disconnect from the first battery cell according to the reconnection instruction, to reconnect the first communication unit to the first battery cell.

7. A battery management apparatus, comprising:
the networking system of any one of claims 1 to 6; and
at least one battery pack, configured to perform data transmission with the main control module in the networking system, wherein the main control module is configured to monitor the battery pack according to transmission data of the battery pack.

8. An electric vehicle, comprising the battery management apparatus of claim 7.
